# EUROPEAN PATENT SPECIFICATION

(11) **EP 4 622 238 B1**
(45) Date of publication and mention of the grant of the patent: **17.06.2026**
(21) Application number: 24196499.8
(22) Date of filing: 26.08.2024
(51) Int. Cl.: H04N 1/00, G03G 15/00, G06F 3/12, H04N 1/60

(54) **INFORMATION PROCESSING SYSTEM, INFORMATION PROCESSING PROGRAM, AND INFORMATION PROCESSING METHOD**
INFORMATIONSVERARBEITUNGSSYSTEM, INFORMATIONSVERARBEITUNGSPROGRAMM UND INFORMATIONSVERARBEITUNGSVERFAHREN
SYSTÈME DE TRAITEMENT D'INFORMATIONS, PROGRAMME DE TRAITEMENT D'INFORMATIONS ET PROCÉDÉ DE TRAITEMENT D'INFORMATIONS

(30) Priority: 22.03.2024 JP 2024045986
(43) Date of publication of application: 24.09.2025
(73) Proprietor: FUJIFILM Business Innovation Corp., Minato-ku Tokyo (JP)
(72) Inventor: SUGIYAMA, Fumiaki, Yokohama-shi, Kanagawa (JP)
(74) Representative: Kurig, Thomas

(56) References cited:
- JP-A- 2015 003 413
- US-A1- 2020 153 999
- US-B2- 10 726 556

## Description

### BACKGROUND OF THE INVENTION

### (i) Field of the Invention

The present invention relates to an information processing system, an information processing program, and an information processing method.

### (ii) Description of Related Art

JP2008-149539A discloses an image inspection apparatus including an irradiation unit that irradiates a sheet on which an image based on document image data is formed with light in an infrared wavelength range, an acquisition unit that acquires the document image data that is a basis of the image formed on the sheet, a generation unit that receives reflected light in an infrared wavelength range reflected by the sheet out of the light emitted by the irradiation unit, and generates read image data having a gradation according to the amount of the received light with a predetermined number of gradations, a reduction unit that reduces the number of gradations of the read image data generated by the generation unit, and an inspection unit that compares the read image data, the number of gradations of which has been reduced by the reduction unit, with the document image data, and outputs data representing a result of the comparison.

JP6743661B discloses an image forming apparatus including an image forming unit that forms an image on a transfer medium based on a job, and a control unit that controls the image forming unit, in which the control unit has a function of acquiring an image reading result obtained by reading an image of a transfer medium on which an image has been formed by the image forming unit, comparing the image in the image reading result with an image based on print image data of a job, and detecting the presence or absence of an abnormality in the transfer medium based on a result of the comparison, and in detecting the abnormality, in a case where an image having a size equal to or larger than a predetermined size exists as a difference in an image non-placement area on a transfer medium where no image formed by the print image data exists, the control unit determines that the image that is the difference is different from an abnormal image.

Patent document US2020153999 discloses an image inspection apparatus. The image inspection apparatus has an image reader that reads an original image on a recording material based on a print job and generates a read image. A hardware processor that analyzes the read image acquired from the image reader and performs image inspection. The hardware processor performs predetermined filter processing on the read image and generates a first reference image. A background density is acquired from the first reference image and sets a threshold based on the background density. The read image is compared to the first reference image and generates a first comparison image. The first comparison image is binarized by using the threshold. A portion where a specific abnormality has occurred is detected. A detection result is outputted.

### SUMMARY OF THE INVENTION

The present invention aims to provide an information processing system, an information processing program, and an information processing method that can prevent an inspection target area from narrowing in a case of inspecting a print result in which a print image is printed on colored paper or a recording medium with pre-printing, compared to a case where a colored portion or a portion with pre-printing is excluded from an inspection target.

According to a first aspect of the present invention, there is provided an information processing system including at least one processor configured to: obtain guideline information on a usage amount of an image forming material that constitutes a print image for each of pixels during a printing process in which the image forming material is placed on an upper side of colored paper or a recording medium with pre-printing and is printed; compare, in a case where a value of the guideline information is relatively large when inspecting a read image obtained by reading a printed matter on which the print image is printed on the recording medium, for each of the pixels, a color density of the read image with a color density of the print image; and compare, in a case where the value of the guideline information is relatively small, for each of the pixels, the color density of the read image with a color density of a recording medium read image obtained by reading information about the recording medium before execution of the printing process.

According to a second aspect of the present invention, in the information processing system according to the first aspect, a case where the value of the guideline information is relatively large may correspond to a case where the usage amount of the image forming material is relatively large, and a case where the value of the guideline information is relatively small may correspond to a case where the usage amount of the image forming material is relatively small.

According to a third aspect of the present invention, in the information processing system according to the first or second aspect, the processor may be configured to, when comparing the color density of the read image with the color density of the print image through the inspection: determine the color density to be normal in a case where a difference is less than an error of an allowable color density; and determine the color density to be mismatched in a case where the difference is equal to or greater than the error of the allowable color density.

According to a fourth aspect of the present invention, in the information processing system according to any one of the first to third aspects, the processor may be configured to, when comparing the color density of the read image with the color density of the recording medium read image through the inspection: determine the color density to be normal in a case where a difference is equal to or greater than an error of a determined color density; and determine the color density to be mismatched in a case where the difference is less than the error of the determined color density.

According to a fifth aspect of the present invention, in the information processing system according to the third or fourth aspect, the processor may be configured to output a determination result of the normality or the mismatch to a display unit.

According to a sixth aspect of the present invention, in the information processing system according to any one of the first to fifth aspects, the processor may be configured to: regard another read image obtained by reading a printed matter on which blank data is printed on the recording medium as the recording medium read image; and acquire pixel position information of a base target from information on the blank data and the recording medium read image.

According to a seventh aspect of the present invention, in the information processing system according to any one of the first to sixth aspects, the processor may be configured to perform processing of determining that the value of the guideline information is relatively large when gradation values for each of the pixels corresponding to a black print image as the image forming material are other than 0.

According to an eighth aspect of the present invention, in the information processing system according to the seventh aspect, the processor may be configured to perform processing of determining that the value of the guideline information is relatively small when an added value of the gradation values for each of the pixels corresponding to a print image of each color other than clear as the image forming material is 0.

According to a ninth aspect of the present invention, in the information processing system according to the eighth aspect, the processor may be configured to perform processing of determining that the value of the guideline information is relatively large when the added value of the gradation values for each of the pixels corresponding to the print image of each color other than clear as the image forming material is equal to or greater than a determined value.

According to a tenth aspect of the present invention, in the information processing system according to the ninth aspect, the processor may be configured to perform processing of determining that the value of the guideline information is relatively small when the added value of the gradation values for each of the pixels corresponding to the print image of each color other than clear as the image forming material is smaller than the determined value.

According to an eleventh aspect of the present invention, in the information processing system according to the sixth aspect, the processor may be configured to compare the color density of the read image with the color density of the recording medium read image in the inspection for a pixel that does not have the print image and has only the base target based on the pixel position information of the base target and pixel position information of the print image.

According to a twelfth aspect of the present invention, there is provided an information processing program causing a computer to execute processing of: calculating guideline information on a usage amount of an image forming material that constitutes a print image for each of pixels during a printing process in which the image forming material is placed on an upper side of colored paper or a recording medium with pre-printing and is printed; comparing, in a case where a value of the guideline information is relatively large when inspecting a read image obtained by reading a printed matter on which the print image is printed on the recording medium, for each of the pixels, a color density of the read image with a color density of the print image; and comparing, in a case where the value of the guideline information is relatively small, for each of the pixels, the color density of the read image with a color density of a recording medium read image obtained by reading information about the recording medium before execution of the printing process.

According to a thirteenth aspect of the present invention, there is provided an information processing method including: calculating guideline information on a usage amount of an image forming material that constitutes a print image for each of pixels during a printing process in which the image forming material is placed on an upper side of colored paper or a recording medium with pre-printing and is printed; comparing, in a case where a value of the guideline information is relatively large when inspecting a read image obtained by reading a printed matter on which the print image is printed on the recording medium, for each of the pixels, a color density of the read image with a color density of the print image; and comparing, in a case where the value of the guideline information is relatively small, for each of the pixels, the color density of the read image with a color density of a recording medium read image obtained by reading information about the recording medium before execution of the printing process.

With the information processing system according to the first aspect, in a case of inspecting a print result in which a print image is printed on colored paper or a recording medium with pre-printing, an inspection target area can be prevented from narrowing compared to a case where a colored portion or a portion with pre-printing is excluded from an inspection target.

With the information processing system according to the second aspect, in a case where the usage amount of the image forming material is relatively large, the color density of the read image can be compared with the color density of the print image, and in a case where the value of the guideline information is relatively small, the color density of the read image can be compared with the color density of the recording medium read image.

With the information processing system according to the third aspect, in a case where the value of the guideline information is relatively large and an influence of the print image is large, the color density of the read image is close to the color density of the print image, resulting in good image quality.

With the information processing system according to the fourth aspect, in a case where the value of the guideline information is relatively small and the influence of the print image is small, the color density of the read image is different from the color density of the recording medium read image, resulting in good image quality.

With the information processing system according to the fifth aspect, it is possible to inform a user of a determination result of the normality or the mismatch.

With the information processing system according to the sixth aspect, by acquiring the pixel position information of the base target, it becomes easier to inspect the read image.

With the information processing system according to the seventh aspect, in a case where the influence of the print image due to the black image forming material is large, the color density of the read image can be compared with the color density of the print image.

With the information processing system according to the eighth aspect, in a case where the influence of the print image due to the image forming material of each color is small, the color density of the read image can be compared with the color density of the recording medium read image.

With the information processing system according to the ninth aspect, in a case where the influence of the print image due to the image forming material of each color is large, the color density of the read image can be compared with the color density of the print image.

With the information processing system according to the tenth aspect, in a case where the influence of the print image due to the image forming material of each color is small, the color density of the read image can be compared with the color density of the recording medium read image.

With the information processing system according to the eleventh aspect, for a pixel that has only the base target and does not have the print image, color determination can be performed based on the error between the color density of the read image and the color density of the recording medium read image.

With the information processing program according to the twelfth aspect, in a case of inspecting a print result in which a print image is printed on colored paper or a recording medium with pre-printing, an inspection target area can be prevented from narrowing compared to a case where a colored portion or a portion with pre-printing is excluded from an inspection target.

With the information processing method according to the thirteenth aspect, in a case of inspecting a print result in which a print image is printed on colored paper or a recording medium with pre-printing, an inspection target area can be prevented from narrowing compared to a case where a colored portion or a portion with pre-printing is excluded from an inspection target.

### BRIEF DESCRIPTION OF THE DRAWINGS

Exemplary embodiment(s) of the present invention will be described in detail based on the following figures, wherein:
Fig. 1 is a block diagram showing a hardware configuration of an information processing system according to a first exemplary embodiment;
Fig. 2 is a block diagram showing an example of a functional configuration of the information processing system;
Fig. 3 is an explanatory diagram showing an example of an operation for extracting a pixel position to be a base target;
Fig. 4 is an explanatory diagram showing an example of a printing operation for performing an inspection;
Fig. 5 is an explanatory diagram showing an example of obtaining guideline information on a usage amount of toner or ink;
Fig. 6 is an explanatory diagram showing an example of obtaining guideline information on a usage amount of toner or ink;
Fig. 7 is an explanatory diagram showing selection information of a determination method;
Fig. 8 is a diagram showing a relationship between guideline information on a usage amount of toner or ink and an influence of the toner or ink;
Fig. 9 is a conceptual diagram showing switching of an inspection method;
Fig. 10 is a diagram showing a relationship between determination method selection information, comparison targets, and determination content;
Fig. 11 is a diagram showing an inspection target, a comparison target, and determination content in a determination method D;
Fig. 12 is a diagram showing a determination method in a case where a recording medium is colored paper;
Fig. 13 is a flowchart showing a flow of guideline information generation processing in the information processing system according to the first exemplary embodiment;
Fig. 14 is a flowchart showing a flow of determination processing for each pixel in the information processing system according to the first exemplary embodiment;
Fig. 15 is an explanatory diagram showing an example of an operation for extracting a pixel position to be excluded from an inspection target in an information processing system according to a comparative example; and
Fig. 16 is an explanatory diagram showing an example of a printing operation for performing an inspection in the information processing system according to the comparative example.

### DETAILED DESCRIPTION OF THE INVENTION

Hereinafter, exemplary embodiments of the present invention will be described in detail with reference to the accompanying drawings. The identical reference numerals are given to the identical or equivalent components and parts in each drawing. In addition, the dimensional ratios in the drawings are exaggerated for convenience of description and may differ from the actual ratios.

### [First Exemplary Embodiment]

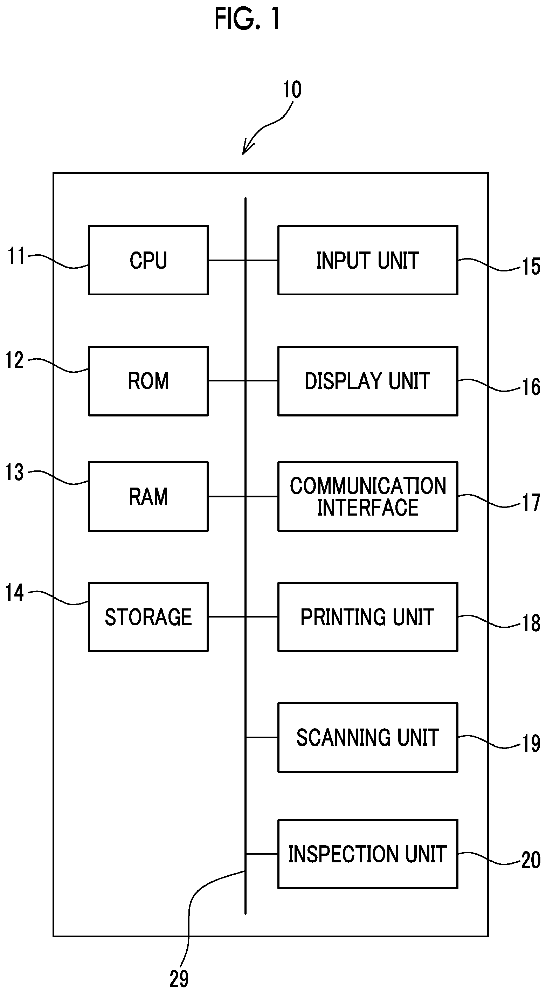

Fig. 1 is a block diagram showing a hardware configuration of an information processing system 10 according to a first exemplary embodiment.

### (Hardware Configuration of Information Processing System)

As shown in Fig. 1, the information processing system 10 includes components, such as a central processing unit (CPU) 11, a read only memory (ROM) 12, a random access memory (RAM) 13, a storage 14, an input unit 15, a display unit 16, a communication interface (communication I/F) 17, a printing unit 18, a scanning unit 19, and an inspection unit 20. The components are communicatively connected to each other via a bus 29. As an example, the information processing system 10 is configured as an image forming system including a printing unit 18. The "system" in the present disclosure includes both a system configured by a plurality of devices and a system configured by a single device.

In the information processing system 10, the input unit 15, the display unit 16, the communication interface 17, the printing unit 18, and the scanning unit 19 are not limited to being directly connected to the bus 29. For example, one or more of the input unit 15, the display unit 16, the printing unit 18, and the scanning unit 19 may be configured to be connected as external devices via an input/output interface connected to the bus 29.

The CPU 11 is a central arithmetic processing unit that executes various programs and controls each unit. The CPU 11 is an example of a processor. The CPU 11 reads the program from the ROM 12 or the storage 14 to be described later, and executes the program using the RAM 13 as a work area. The CPU 11 performs control of the above components and various types of arithmetic processing in accordance with the program read from the ROM 12 or the storage 14.

The ROM 12 stores various programs and various types of data. The RAM 13 temporarily stores a program or data as a work area. The storage 14 is configured by a hard disk drive (HDD), a solid state drive (SSD), and stores various programs including an operating system and various types of data.

The input unit 15 allows a user to perform input operations. In a case where a user performs an input operation on the input unit 15, the printing unit 18, the inspection unit 20, and the like are operated.

The display unit 16 displays various types of information. As an example, the display unit 16 is configured with a liquid crystal display. For example, the display unit 16 displays a print image as print data to be printed by the printing unit 18, the inspection results by the inspection unit 20, and the like.

In the first exemplary embodiment, the input unit 15 and the display unit 16 are separated, but instead, a configuration may be provided that includes a display operation unit that integrates the function of a display unit that displays various types of information and the function of an input unit that performs input operations by the user. For example, the display operation unit may be provided with an operation panel. For example, the operation panel is a touch panel user interface (UI), which is a touch panel display in which a touch panel is disposed to be superimposed on a liquid crystal display.

The communication interface 17 is an interface for communicating with a network, and uses standards such as Ethernet (registered trademark), FDDI, and Wi-Fi (registered trademark), for example. The network may be, for example, the Internet, a wired or wireless network. As an example, the information processing system 10 is connected to a server (not shown) via the communication interface 17, and can communicate information with the server.

The printing unit 18 prints a print image, such as print data, on paper. Paper is an example of a recording medium. For example, the print image may be received from outside via a network by the communication interface 17, or may be acquired by reading a document using an image reading device (not shown). Although not shown, the information processing system 10 shown in Fig. 1 may be configured to include an image reading device that optically reads image data from a document.

The printing unit 18 performs processes such as transporting a plurality of sheets of paper one by one to a printing position of the printing unit 18, printing on the sheets of paper, and discharging the printed sheets of paper. The printing unit 18 may be configured to include an electrophotographic printing mechanism that prints an image on paper using toner or may be configured to include an ink ejection printing mechanism that forms an image by ejecting ink onto paper. Toner or ink is an example of an image forming material. The printing unit 18 performs a printing process in which an image forming material that constitutes a print image is placed on an upper side of the paper and is printed. In a case where print data and various types of operation commands are input from the CPU 11, the printing unit 18 performs printing on one side or both sides of the paper and discharges the paper to a discharge unit.

When inspecting a printed matter in which a print image is printed on paper, the scanning unit 19 optically reads printed matter data from the printed matter. The scanning unit 19 is disposed on a downstream side of the printing unit 18 in a transport direction of paper. In a case where an operation command for performing an inspection on a printed matter is input from the CPU 11, the scanning unit 19 reads the printed matter to acquire a scan image which is an inspection target. Furthermore, the scanning unit 19 reads a printed matter of blank data printed on colored paper or paper with pre-printing to acquire a scan image, which is information about the paper.

The inspection unit 20 inspects the image quality of the printed matter on which the print image is printed by the printing unit 18. The inspection unit 20 inspects the image quality of the printed matter based on, for example, an inspection instruction input by the input unit 15. The inspection unit 20 inspects the image quality using a scan image obtained by reading the printed matter with the scanning unit 19. The inspection of image quality by the inspection unit 20 will be described later.

### (Functional Configuration of Information Processing System)

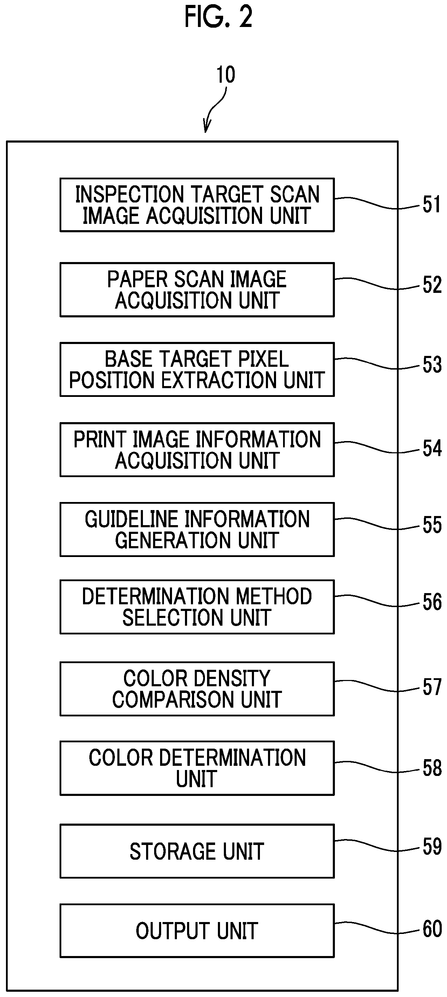

Fig. 2 is a block diagram showing an example of a functional configuration of the information processing system 10.

As shown in Fig. 2, the information processing system 10 has, as a functional configuration, an inspection target scan image acquisition unit 51, a paper scan image acquisition unit 52, a base target pixel position extraction unit 53, a print image information acquisition unit 54, a guideline information generation unit 55, a determination method selection unit 56, a color density comparison unit 57, a color determination unit 58, a storage unit 59, and an output unit 60. Each functional configuration is realized by the CPU 11 reading an information processing program stored in the ROM 12 or the storage 14, loading the information processing program in the RAM 13, and executing the information processing program.

The inspection target scan image acquisition unit 51 acquires a scan image to be used as an inspection target by reading a printed matter on which a print image is printed on paper.

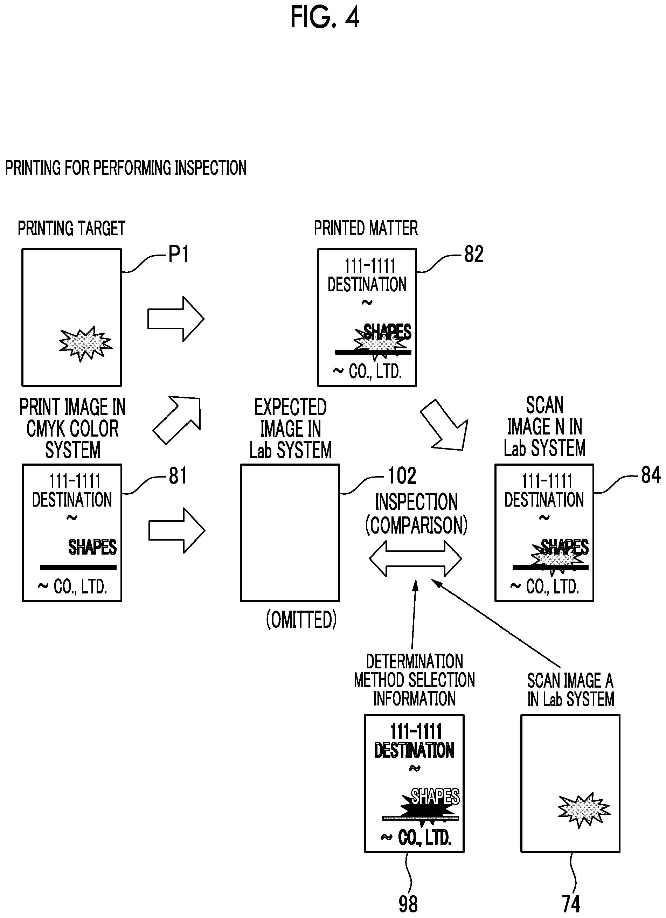

For example, as shown in Fig. 4, the inspection target scan image acquisition unit 51 acquires a first scan image 84 (see a scan image N in a Lab system in Fig. 4) obtained by reading a printed matter 82 on which a print image 81 in a CMYK color system is printed on paper P1, which is an example of a printing target. The first scan image 84 is acquired by reading the printed matter 82 with the scanning unit 19. The first scan image 84 is an inspection target by the inspection unit 20 as described above. The print image 81 in the CMYK color system is image data. In addition, the first scan image 84 (see the scan image N in the Lab system in Fig. 4) is an example of a read image.

Here, the CMYK color system is a method used to express colors in a printed matter, and is an acronym for Cyan, Magenta, Yellow, and Key plate (close to black). The Lab system refers to the L*a*b* color space, which is a color system for expressing the color of an object. Lightness is represented by L*, and chromaticity, which indicates hue and chroma, is represented by a* and b*. The first scan image 84 is stored in the storage unit 59, for example.

The paper scan image acquisition unit 52 acquires a paper read image obtained by reading paper information about colored paper or paper with pre-printing before the execution of the printing process.

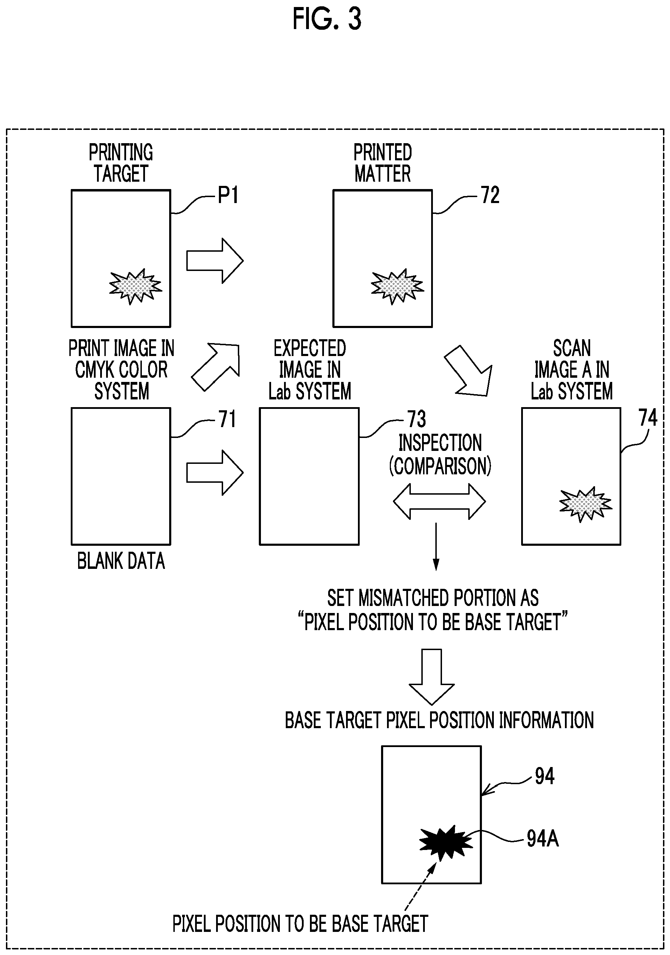

For example, as shown in Fig. 3, the paper scan image acquisition unit 52 acquires a second scan image 74 (see a scan image A in a Lab system in Fig. 3) obtained by reading a printed matter 72 on which a blank data 71 in a CMYK color system is printed on paper P1, which is an example of a printing target. The second scan image 74 is acquired by reading the printed matter 72 with the scanning unit 19. The second scan image 74 is an example of a recording medium read image and an example of another read image. The second scan image 74 is stored in the storage unit 59, for example. In the first exemplary embodiment, the second scan image 74 is acquired by reading the printed matter 72 on which the blank data 71 in the CMYK color system is printed on the paper P1, but the present invention is not limited thereto. For example, the second scan image may be acquired by reading the paper P1 itself.

The base target pixel position extraction unit 53 extracts a pixel position to be a base target from information about paper, which is an example of a printing target. As an example, for colored paper or paper with pre-printing, the base target pixel position extraction unit 53 extracts pixel positions of the base target corresponding to the colored paper, or extracts pixel positions of the base target corresponding to the pre-printed portion.

For example, as shown in Fig. 3, the base target pixel position extraction unit 53 acquires an expected image 73 in the Lab system corresponding to the blank data 71 in the CMYK color system. The expected image 73 is an example of information of blank data. Then, the base target pixel position extraction unit 53 compares the expected image 73 in the Lab system with the second scan image 74, and sets a mismatched portion as a "pixel position to be a base target". Accordingly, the base target pixel position extraction unit 53 obtains base target pixel position information 94 including a pixel position 94A to be a base target. The base target pixel position information 94 is stored in the storage unit 59, for example.

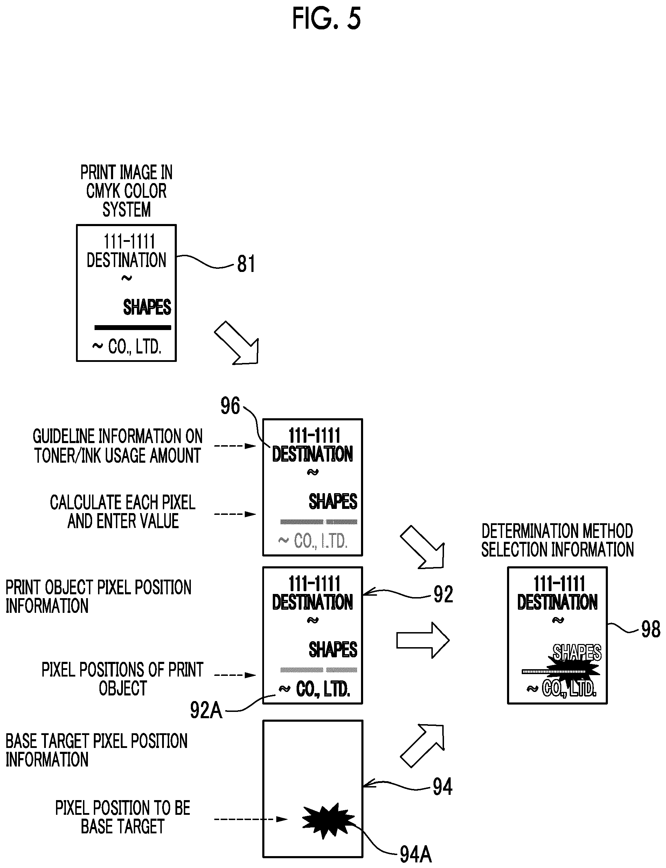

The print image information acquisition unit 54 acquires information about a print image to be printed on paper, which is an example of a printing target. For example, as shown in Fig. 4, the print image 81 in the CMYK color system to be printed on paper P1, which is an example of a printing target, is acquired. Furthermore, the print image information acquisition unit 54 acquires an expected image 102 in the Lab system corresponding to the print image 81 in the CMYK color system. The expected image 102 in the Lab system is an example of a print image. In Fig. 4, the image shown in the expected image 102 is omitted. Also, for example, as shown in Fig. 5, the print image information acquisition unit 54 acquires print object pixel position information 92 including pixel positions 92A of a print object from information about the print image 81 in the CMYK color system. Here, a print object refers to an element that constitutes print data for printing on paper.

The guideline information generation unit 55 obtains guideline information on a usage amount of an image forming material (for example, toner or ink) for each pixel.

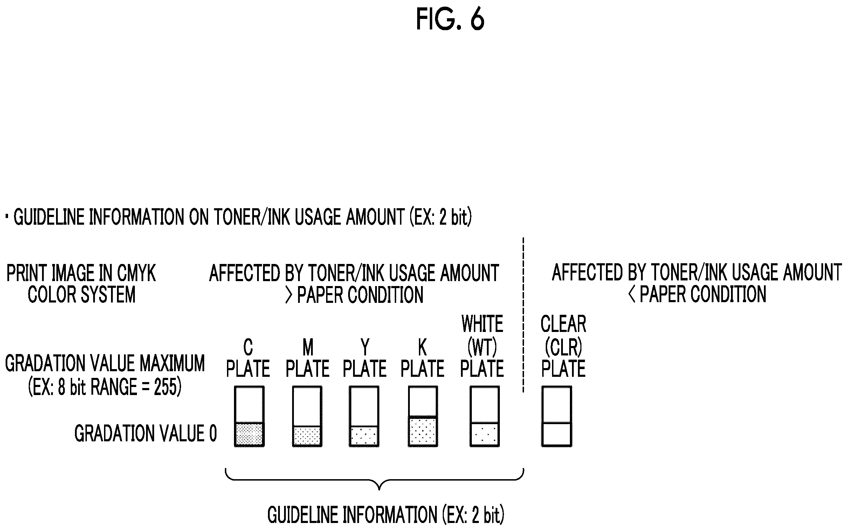

For example, as shown in Fig. 6, in a case where a paper condition is likely to be affected by the usage amount of the image forming material (for example, toner or ink) (a cyan plate, a magenta plate, a yellow plate, a black plate, and a white plate), it is preferable for the guideline information generation unit 55 to increase the value of the guideline information. Also, for example, in a case where the paper condition is unlikely to be affected by the usage amount of the image forming material (for example, toner or ink) (a clear plate that is a clear color), it is preferable for the guideline information generation unit 55 to reduce the value of the guideline information. The guideline information on the usage amount of the image forming material (for example, toner or ink) shown in Fig. 6 is an example of 2 bits.

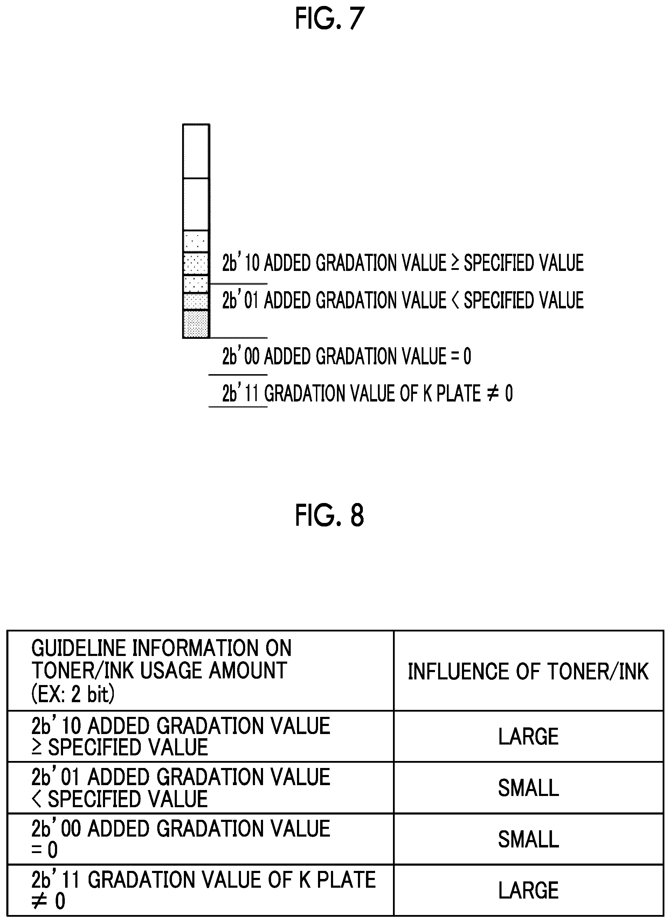

As an example, as shown in Fig. 7, the guideline information generation unit 55 obtains guideline information on the usage amount of the image forming material (for example, toner or ink) according to the gradation value of black or the added gradation value of each color. For example, in a case where the usage amount of the image forming material (for example, toner or ink) is relatively large, the guideline information generation unit 55 may increase the value of the guideline information on the usage amount of the image forming material (for example, toner or ink). In a case where the usage amount of the image forming material (for example, toner or ink) is relatively small, the guideline information generation unit 55 may reduce the value of the guideline information on the usage amount of the image forming material (for example, toner or ink). The guideline information on the usage amount of the image forming material (for example, toner or ink) shown in Fig. 7 is an example of 2 bits.

As an example, as shown in Figs. 7 and 8, in a case where the gradation value of the K plate (black plate) is not 0, the guideline information generation unit 55 relatively increases the value of the guideline information (for example, 2b'11) because the influence of the image forming material (for example, toner or ink) is large. Here, a case where the gradation value is 0 corresponds to a case where no image forming material of the corresponding color is placed on the paper. The greater the gradation value, the greater the amount of the image forming material of the corresponding color that is placed on the paper. As an example, in a case where the added gradation value of each color is 0, the guideline information generation unit 55 relatively reduces the value of the guideline information (for example, 2b'00) because the influence of the image forming material (for example, toner or ink) is small. As an example, in a case where the added gradation value of each color is smaller than a specified value, which is an example of a determined value, the guideline information generation unit 55 relatively reduces the value of the guideline information (for example, 2b'01) because the influence of the image forming material (for example, toner or ink) is small. As an example, in a case where the added gradation value of each color is equal to or greater than a specified value, the guideline information generation unit 55 relatively increases the value of the guideline information (for example, 2b'10) because the influence of the image forming material (for example, toner or ink) is large.

As shown in Fig. 5, the guideline information generation unit 55 obtains guideline information 96 on the usage amount of the image forming material (for example, toner or ink) for each pixel, and inputs the value of the guideline information 96 for each pixel. The guideline information 96 on the usage amount of the image forming material for each pixel is stored in the storage unit 59, for example.

For example, the guideline information generation unit 55 generates determination pixel information (for example, 2 bits) from the print object pixel position information 92 and the base target pixel position information 94 (see Fig. 7).

The determination method selection unit 56 selects a determination method for the inspection by the inspection unit 20. As shown in Fig. 5, the determination method selection unit 56 generates determination method selection information 98 by combining the guideline information 96 on the usage amount of the image forming material for each pixel, the base target pixel position information 94, and the print object pixel position information 92. For example, the determination method selection unit 56 selects the determination method for the inspection based on the determination method selection information 98.

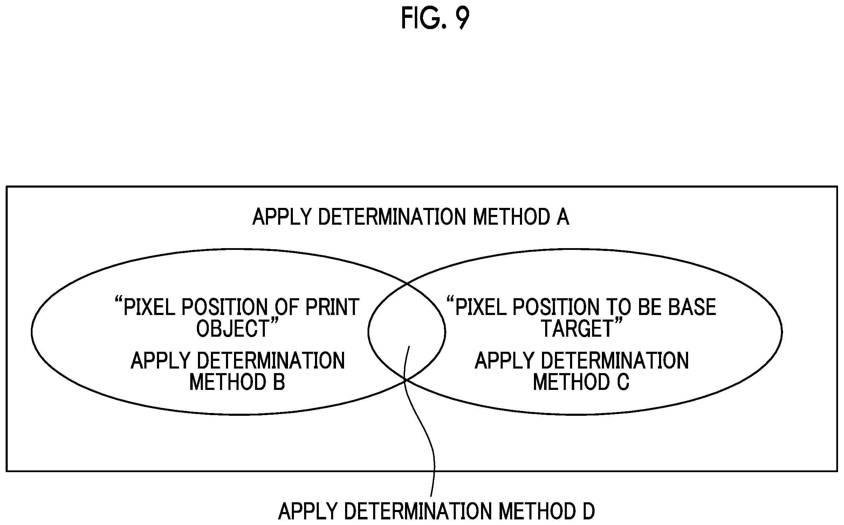

For example, as shown in Fig. 9, in a case where neither pixel position 94A (see Fig. 5) to be the base target nor pixel position 92A (see Fig. 5) of the print object is applicable, a determination method A is applied. In a case where the pixel position 94A to be the base target is not applicable, but only the pixel position 92A of the print object is applicable, a determination method B is applied. In a case where the pixel position 92A of the print object is not applicable, but only the pixel position 94A to be the base target is applicable, a determination method C is applied. In a case where the overlapping portion of the pixel position 92A of the print object and the pixel position 94A to be the base target is applicable, a determination method D is applied. The content of the determination methods A to D will be described later.

The color density comparison unit 57 compares a color density of the inspection target with a color density of the comparison target based on the determination methods A to D. The inspection target is, for example, a first scan image 84 (see the scan image N in Fig. 4). The comparison target differs depending on the determination methods A to D. The comparison targets will be described later.

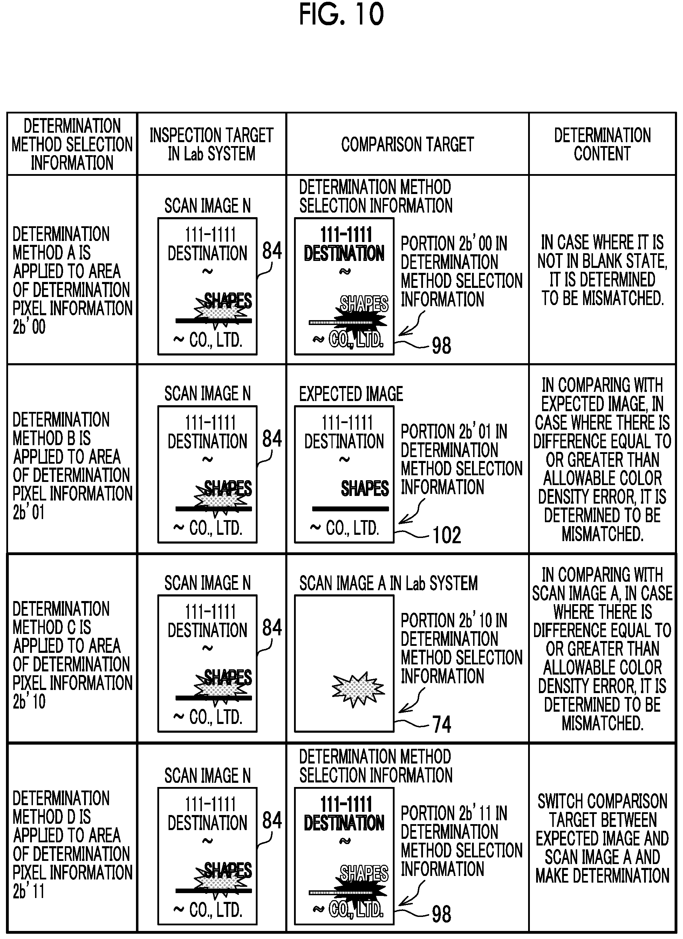

The color determination unit 58 determines the color of the inspection target according to a result of the comparison obtained by comparing the color density of the inspection target with the color density of the comparison target. The color determination unit 58 determines the color of the inspection target according to the determination content shown in Fig. 10, for example.

Fig. 10 is a diagram showing an example of a relationship between determination method selection information (see the determination method selection information 98 shown in Fig. 5), inspection targets, comparison targets, and determination content. For example, the relationship between determination method selection information, inspection targets, comparison targets, and determination content shown in Fig. 10 is stored in the storage unit 59 as a table relating to the determination method.

As shown in Fig. 10, for example, in the determination method selection information (see the determination method selection information 98 shown in Fig. 5), the determination method A is applied to the area of determination pixel information "2b'00". The inspection target is a first scan image 84 (scan image N in Fig. 10) in the Lab system. The comparison target is the portion "2b'00" in the determination method selection information 98. In comparing the color density of the inspection target with the color density of the comparison target, in a case where the inspection target is not in a blank state, it is determined to be mismatched. That is, in a case where the inspection target is in a blank state, it is determined to be matched.

For example, in the determination method selection information, the determination method B is applied to the area of determination pixel information "2b'01". The inspection target is a first scan image 84 (scan image N in Fig. 10) in the Lab system. The comparison target is the portion "2b'01" in the expected image 102. That is, the color density of the first scan image 84 (scan image N in Fig. 10) in the Lab system, which is an inspection target, is compared with the color density of the expected image 102 in the Lab system. When the color density of the inspection target is compared with the color density of the expected image 102, in a case where there is a difference that is equal to or greater than an allowable color density error, it is determined to be mismatched. That is, when the color density of the inspection target is compared with the color density of the expected image 102, in a case where the difference is smaller than the allowable color density error, it is determined to be matched.

For example, in the determination method selection information, the determination method C is applied to the area of determination pixel information "2b'10". The inspection target is a first scan image 84 (scan image N in Fig. 10) in the Lab system. The comparison target is a second scan image 74 (scan image A in Fig. 10) in the Lab system. That is, the color density of the first scan image 84 (scan image N in Fig. 10) in the Lab system, which is an inspection target, is compared with the color density of the second scan image 74 (scan image A in Fig. 10) in the Lab system. When the color density of the inspection target is compared with the color density of the second scan image 74 (scan image A in Fig. 10), in a case where there is a difference that is equal to or greater than an allowable color density error, it is determined to be mismatched. That is, when the color density of the inspection target is compared with the color density of the second scan image 74 (scan image A in Fig. 10), in a case where the difference is smaller than the allowable color density error, it is determined to be matched.

For example, in the determination method selection information, the determination method D is applied to the area of determination pixel information "2b'11". The inspection target is a first scan image 84 (scan image N in Fig. 10) in the Lab system. In the determination method D, the comparison target is switched between the expected image in the Lab system and the second scan image (scan image A) depending on the conditions to be described below.

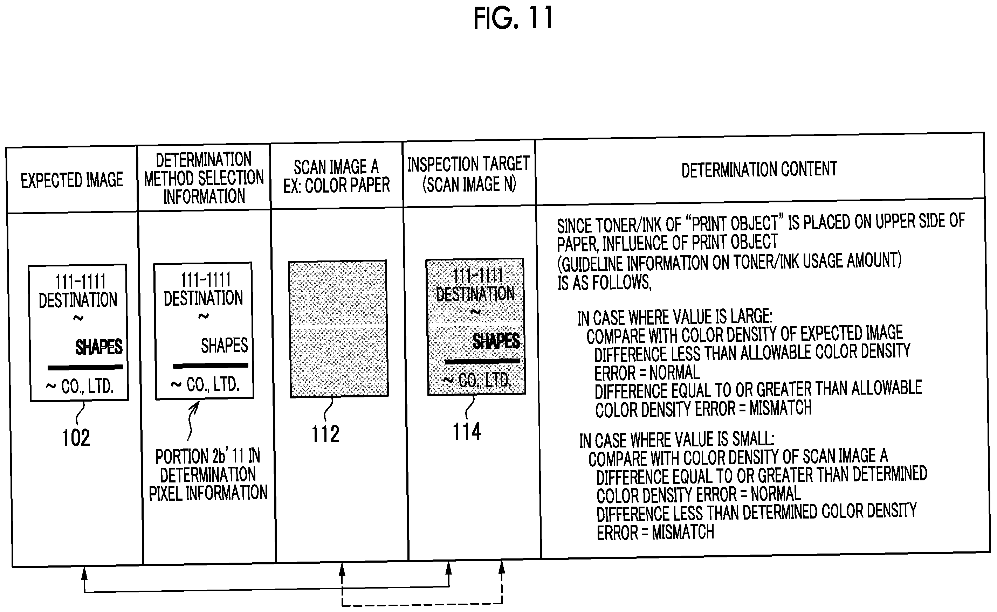

Fig. 11 is a diagram showing an example of a relationship between an inspection target, a comparison target, and determination content in a case where the determination method D is applied. In Fig. 11, the paper is an example of colored paper. The relationship between an inspection target, a comparison target, and determination content shown in Fig. 11 is stored in the storage unit 59 as a table relating to the determination method D. As shown in Fig. 11, the inspection target is a first scan image 114 (see the scan image N in Fig. 11). The first scan image 114 is a scan image in a Lab system obtained by reading a printed matter in which a print image is printed on colored paper.

Since the image forming material (toner or ink) that constitutes the print object is placed on the upper side of the paper, for example, in a case where the influence of the print object is large, the comparison target is the expected image 102 in the Lab system. A case where the influence of the print object is large corresponds to a case where the value of the guideline information on the usage amount of the image forming material (for example, toner or ink) is relatively large. A case where the influence of the print object is large corresponds to a case where the usage amount of the image forming material (toner or ink) is relatively large. In this case, for example, since it is preferable that the color densities are as close as possible, the color density of the inspection target is compared with the color density of the expected image 102.

When the color density of the inspection target is compared with the color density of the expected image 102, for example, in a case where the difference is less than the allowable color density error, the color density is determined to be normal, and in a case where the difference is equal to or greater than the allowable color density error, the color density is determined to be mismatched.

Also, as shown in Fig. 11, for example, in a case where the influence of the print object is small, the comparison target is a second scan image 112 (scan image A in Fig. 11). In the example shown in Fig. 11, since the paper is colored paper, the second scan image 112 is a scan image A obtained by reading a printed matter in which blank data is printed on colored paper. That is, the second scan image 112 is an example of a recording medium read image in which information about paper is read before the execution of a printing process. Information about paper is scannable image information that includes color information.

A case where the influence of the print object is small corresponds to a case where the value of the guideline information on the usage amount of the image forming material is relatively small. A case where the influence of the print object is small corresponds to a case where the usage amount of the image forming material (toner or ink) is relatively small. In this case, for example, since it is preferable that the color densities are different, the color density of the inspection target is compared with the color density of the second scan image 112 (scan image A in Fig. 11).

When the color density of the inspection target is compared with the color density of the second scan image 112 (scan image A in Fig. 11), for example, in a case where the difference is equal to or greater than a determined color density error, the color density is determined to be normal, and in a case where the difference is less than the determined color density error, the color density is determined to be mismatched.

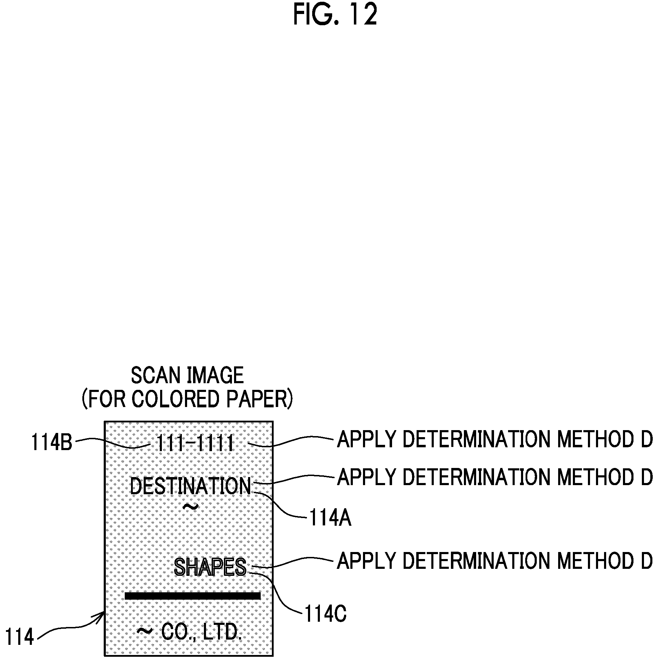

As shown in Fig. 12, in a case where the paper is colored paper, the determination method D is applied to the first scan image 114 obtained by reading a printed matter in which a print image is printed on paper at all of a pixel position 114A where only a base target is present, a pixel position 114B where only a print object is present, and a pixel position 114C where a base target and a print object overlap.

The storage unit 59 stores information relating to the inspection. As described above, the storage unit 59 stores, for example, the first scan image 84 obtained by reading the printed matter 82 in which the print image 81 in the CMYK color system is printed on the paper P1. In addition, the storage unit 59 stores, for example, the second scan image 74 and the base target pixel position information 94. The storage unit 59 also stores, for example, the guideline information 96 on the usage amount of the image forming material (for example, toner or ink) for each pixel. Furthermore, the storage unit 59 stores, for example, tables relating to determination methods (see Figs. 10 and 11).

The output unit 60 outputs information relating to the inspection results. For example, the output unit 60 outputs a determination result of the normality or the mismatch regarding the color determination as the inspection result to the display unit 16.

### (Inspection Method of Comparative Example)

Here, an inspection of the image quality of a printed matter by an information processing system according to a comparative example will be described.

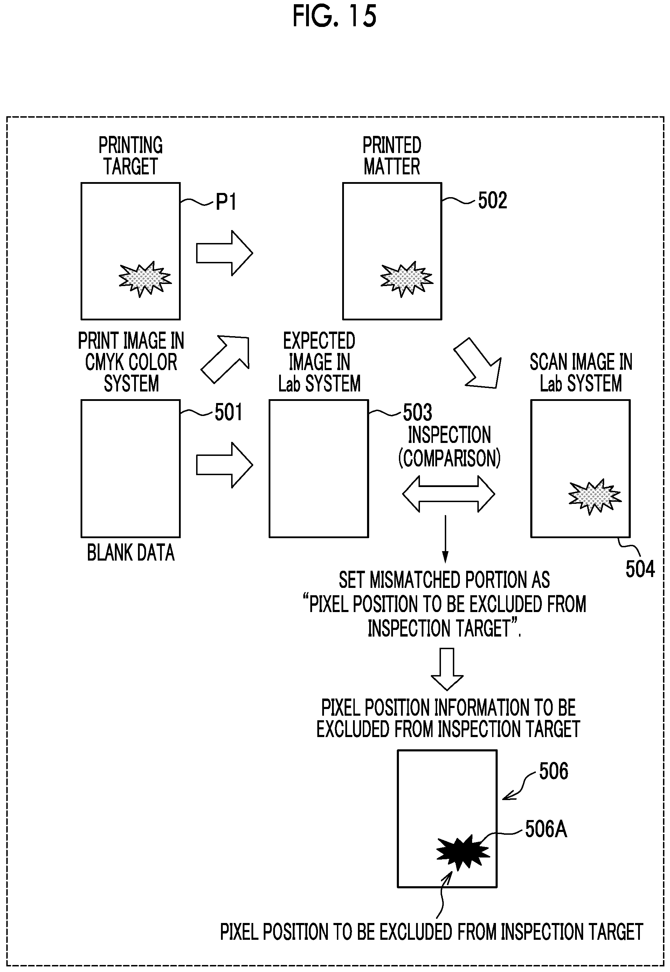

Fig. 15 is an explanatory diagram showing a method of extracting a pixel position to be excluded from an inspection target in an information processing system according to a comparative example. As shown in Fig. 15, in the information processing system according to the comparative example, a printed matter 502 in which blank data 501 (print image in a CMYK color system) is printed on paper P1, which is an example of a printing target, is formed, and a second scan image 504 in a Lab system obtained by reading the printed matter 502 with a scanning unit is acquired. In the information processing system according to the comparative example, an expected image 503 in the Lab system corresponding to blank data 501 in the CMYK color system is compared with a second scan image 504 in the Lab system, and the mismatched portion is set as a pixel position 506A to be excluded from an inspection target. In this way, pixel position information 506 to be excluded from an inspection target, which includes the pixel position 506A to be excluded from the inspection target, is acquired.

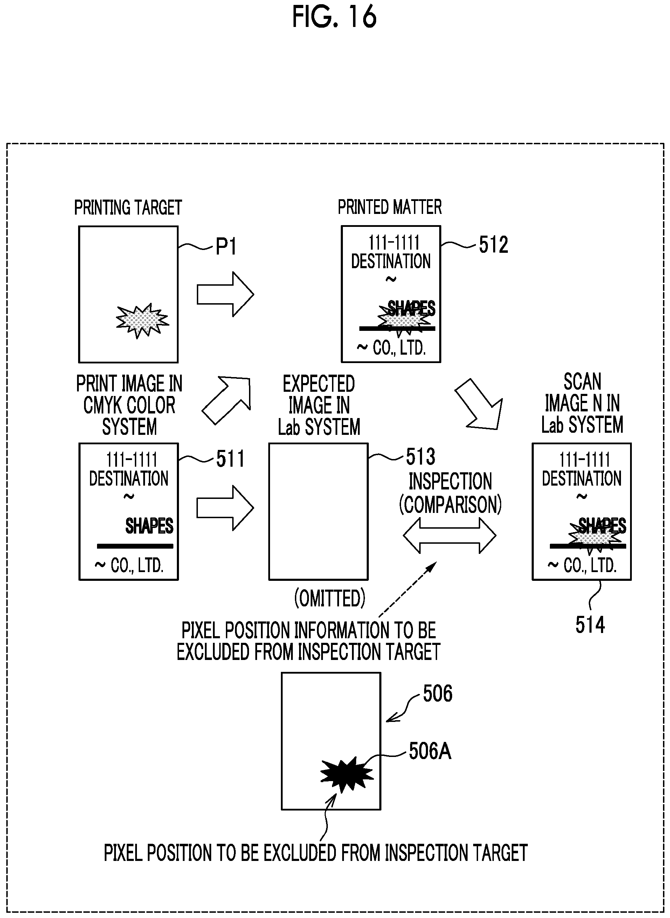

Fig. 16 is an explanatory diagram showing printing of an inspection performed by the information processing system according to the comparative example. As shown in Fig. 16, in the information processing system according to the comparative example, a printed matter 512 in which a print image 511 in a CMYK color system is printed on paper P1, which is an example of a printing target, is formed, and a first scan image 514 in a Lab system obtained by reading the printed matter 512 with a scanning unit is acquired.

In the information processing system according to the comparative example, an expected image 513 in the Lab system corresponding to the print image 511 in the CMYK color system is acquired. In Fig. 16, the image shown in the expected image 513 is omitted. The first scan image 514 in the Lab system is compared with the expected image 513 in the Lab system to perform an inspection. At this time, no inspection is performed at the pixel position 506A to be excluded from the inspection target. Therefore, although not shown in the drawings, for example, in a case where the paper as an example of the printing target is colored paper, all the images are excluded from the inspection target.

### (Operation of First Exemplary Embodiment)

Next, an operation of the information processing system 10 according to the first exemplary embodiment will be described.

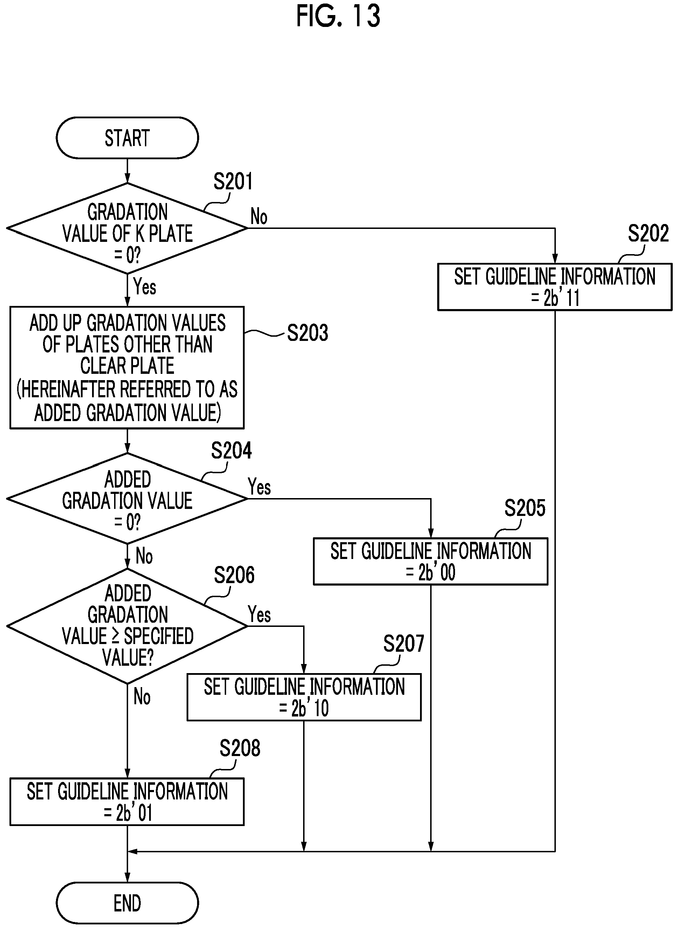

Fig. 13 is a flowchart showing a flow of guideline information generation processing, which is handled by the information processing system 10 according to the first exemplary embodiment. In the information processing system 10, the CPU 11 reads an information processing program for generating guideline information from the ROM 12 or the storage 14, loads the information processing program into the RAM 13, and executes the information processing program, thereby performing information processing.

The CPU 11 determines whether or not the gradation value of the K plate (black plate) is 0 (step S201). In a case where the gradation value of the K plate (black plate) is 0, no black image forming material (toner or ink) is placed on the paper.

In a case where the gradation value of the K plate (black plate) is not 0 (step S201: NO), the CPU 11 sets the guideline information to 2b'11 (step S202). In this case, the influence of the black image forming material (toner or ink) is large, and the value of the guideline information on the usage amount of the image forming material is relatively large (see Fig. 8). This ends the process based on the program of the guideline information generation processing handled by the information processing system 10.

In a case where the gradation value of the K plate (black plate) is 0 (step S201: YES), the CPU 11 adds up the gradation values of the plates other than the clear plate (step S203). In the following flowcharts, the gradation value obtained by adding up the gradation values of the plates other than the clear plate will be referred to as the "added gradation value". Examples of plates other than the clear plate include a cyan plate, a magenta plate, a yellow plate, and a white plate (WT plate) (see Fig. 6).

The CPU 11 determines whether or not the added gradation value is 0 (step S204). A case where the added gradation value is not 0 corresponds to a case where one or more colors of the plates other than the clear plate are placed on the paper.

In a case where the added gradation value is 0 (step S204: YES), the CPU 11 sets the guideline information to 2b'00 (step S205). In this case, the influence of the image forming material (toner or ink) is small, and the value of the guideline information on the usage amount of the image forming material is relatively small (see Fig. 8). This ends the process based on the program of the guideline information generation processing handled by the information processing system 10.

In a case where the added gradation value is not 0 (step S204: NO), the CPU 11 determines whether or not the added gradation value is equal to or greater than a specified value (step S206). The specified value is a predetermined value.

In a case where the added gradation value is equal to or greater than the specified value (step S206: YES), the CPU 11 sets the guideline information to 2b' 10 (step S207). In this case, the influence of the image forming material (toner or ink) is large, and the value of the guideline information on the usage amount of the image forming material is relatively large (see Fig. 8). This ends the process based on the program of the guideline information generation processing handled by the information processing system 10.

In a case where the added gradation value is smaller than the specified value (step S206: NO), the CPU 11 sets the guideline information to 2b'01 (step S208). In this case, the influence of the image forming material (toner or ink) is small, and the value of the guideline information on the usage amount of the image forming material is relatively small (see Fig. 8). This ends the process based on the program of the guideline information generation processing handled by the information processing system 10.

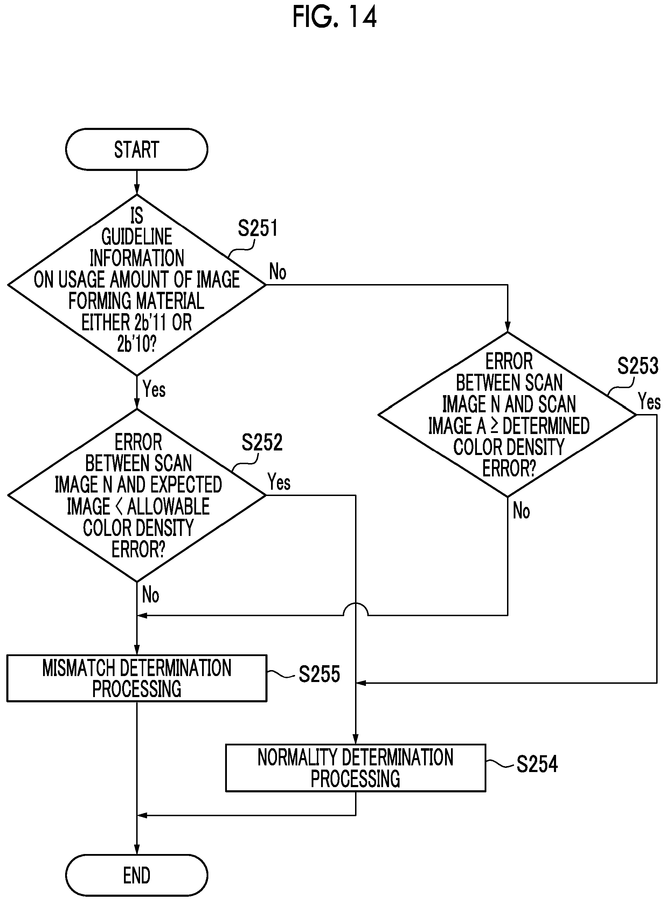

Fig. 14 is a flowchart showing a flow of determination processing for each pixel, which is handled by the information processing system 10 according to the first exemplary embodiment. In the information processing system 10, the CPU 11 reads an information processing program for determining each pixel from the ROM 12 or the storage 14, loads the information processing program into the RAM 13, and executes the information processing program, thereby performing information processing.

The CPU 11 determines whether or not the guideline information on the usage amount of the image forming material (toner or ink) is either 2b' 11 or 2b' 10 (step S251). A case where the guideline information is either 2b'11 or 2b'10 corresponds to a case where the value of the guideline information is relatively large and the influence of the print object formed by the image forming material (toner or ink) is large. A case where the guideline information is neither 2b'11 nor 2b'10 (that is, in a case where the guideline information is neither 2b'11 nor 2b'10) corresponds to a case where the guideline information is 2b'01 or 2b'00. A case where the guideline information is 2b'01 or 2b'00 corresponds to a case where the value of the guideline information is relatively small and the influence of the print object formed by the image forming material (toner or ink) is small.

In a case where the guideline information on the usage amount of image forming material (toner or ink) is either 2b' 11 or 2b' 10 (step S251: YES), the CPU 11 determines whether or not the error between the scan image N and the expected image is smaller than the allowable color density error (step S252). Specifically, as shown in Fig. 11, the CPU 11 compares the color density of the first scan image 114 (scan image N), which is an inspection target, with the color density of the expected image 102, which is a comparison target. The CPU 11 determines whether or not the error between the color density of the first scan image 114 (scan image N) and the color density of the expected image 102 is smaller than the allowable color density error.

In a case where the guideline information on the usage amount of image forming material (toner or ink) is neither 2b'11 nor 2b'10 (step S251: NO), the CPU 11 determines whether or not the error between the scan image N and the scan image A is equal to or greater than the determined color density error (step S253). Specifically, as shown in Fig. 11, the CPU 11 compares the color density of a first scan image 114 (scan image N), which is an inspection target, with the color density of the second scan image 112 (scan image A), which is a comparison target. The CPU 11 determines whether or not the error between the color density of the first scan image 114 (scan image N) and the color density of the second scan image 112 (scan image A) is equal to or greater than the determined color density error.

In the process of step S252, in a case where the error between the scan image N and the expected image is smaller than the allowable color density error (step S252: YES), the CPU 11 performs processing of determining that the color density of the inspection target is normal (step S254). A case where the color density error is smaller than the allowable color density error is similar to a case where the color density error is less than the allowable color density error.

In a case where the error between the scan image N and the expected image is equal to or greater than the allowable color density error (step S252: NO), the CPU 11 performs processing of determining that the color density of the inspection target is mismatched (step S255).

Furthermore, in the process of step S253, in a case where the error between the scan image N and the scan image A is equal to or greater than the determined color density error (step S253: YES), the CPU 11 proceeds to the process of step S254. That is, the CPU 11 performs processing of determining that the color density of the inspection target is normal (step S254).

In a case where the error between the scan image N and the scan image A is smaller than the determined color density error (step S252: NO), the CPU 11 proceeds to the process of step S255. That is, the CPU 11 performs processing of determining that the color density of the inspection target is mismatched (step S255). Such determination processing is executed for each pixel. This ends the process based on the information processing program for determining each pixel, which is handled by the information processing system 10.

In the above-described information processing system 10, the CPU 11 obtains guideline information on the usage amount of the image forming material for each pixel during a printing process in which the image forming material that constitutes a print image is placed on the upper side of colored paper or paper with pre-printing and is printed. Furthermore, when the CPU 11 inspects a scan image N (for example, the first scan image 114 shown in Fig. 11) obtained by reading a printed matter on which a print image is printed on paper, in a case where the value of the guideline information is relatively large, the CPU 11 compares the color density of the scan image N with the color density of the expected image 102 for each pixel (see Fig. 11). In addition, in a case where the value of the guideline information is relatively small, the CPU 11 compares, for each pixel, the color density of the scan image N (for example, the first scan image 114 shown in Fig. 11) with the color density of the scan image A (for example, the second scan image 112 shown in Fig. 11) obtained by reading information about paper before the execution of the printing process.

Therefore, in the information processing system 10, in a case of inspecting a print result in which a print image is printed on colored paper or paper with pre-printing, the inspection target area can be prevented from narrowing compared to the case where a colored portion or a portion with pre-printing is excluded from an inspection target. For example, in the information processing system according to the comparative example shown in Fig. 16, the portion with pre-printing is a pixel position 506A to be excluded from an inspection target. In contrast, in the information processing system 10, it is possible to prevent the inspection target area from narrowing, compared to a case where the portion with pre-printing is excluded from the inspection target.

In addition, in the information processing system 10, a case where the value of the guideline information is relatively large corresponds to a case where the usage amount of the image forming material is relatively large, and a case where the value of the guideline information is relatively small corresponds to a case where the usage amount of the image forming material is relatively small. Therefore, in the information processing system 10, in a case where the usage amount of the image forming material is relatively large, the color density of the scan image N (for example, the first scan image 114 shown in Fig. 11) can be compared with the color density of the expected image 102 (see Fig. 11). In addition, in a case where the value of the guideline information is relatively small, the color density of the scan image N (for example, the first scan image 114 shown in Fig. 11) can be compared with the color density of the scan image A (for example, the second scan image 112 shown in Fig. 11).

In addition, when the CPU 11 compares the color density of the scan image N (for example, the first scan image 114 shown in Fig. 11) with the color density of the expected image 102 through the inspection, in a case where the difference is less than the allowable color density error, the color density is determined to be normal, and in a case where the difference is equal to or greater than the allowable color density error, the color density is determined to be mismatched. Therefore, in the information processing system 10, in a case where the value of the guideline information is relatively large and the influence of the print image is large, the color density of the scan image N (for example, the first scan image 114 shown in Fig. 11) is close to the color density of the expected image 102, resulting in good image quality.

In addition, when the CPU 11 compares the color density of the scan image N (for example, the first scan image 114 shown in Fig. 11) with the color density of the scan image A (for example, the second scan image 112 shown in Fig. 11) through the inspection, in a case where the difference is equal to or greater than the determined color density error, the color density is determined to be normal, and in a case where the difference is less than the determined color density error, the color density is determined to be mismatched. Therefore, in the information processing system 10, in a case where the value of the guideline information is relatively small and the influence of the print image is small, the color density of the scan image N (for example, the first scan image 114 shown in Fig. 11) is different from the color density of the scan image A (for example, the second scan image 112 shown in Fig. 11), resulting in good image quality.

Moreover, the CPU 11 outputs a determination result of the normality or the mismatch to the display unit 16. Therefore, the information processing system 10 can inform the user of the determination result of the normality or the mismatch.

Furthermore, the CPU 11 sets an image obtained by reading a printed matter on which blank data is printed on paper as a scan image A (for example, the second scan image 112 shown in Fig. 11). Furthermore, the CPU 11 acquires base target pixel position information 94 including the pixel position 94A of the base target from the expected image 73 as information of blank data and the scan image A (for example, the second scan image 112 shown in Fig. 11). Therefore, in the information processing system 10, by acquiring the base target pixel position information 94, it becomes easier to inspect the scan image N of the printed matter (for example, the first scan image 114 shown in Fig. 11).

Furthermore, when the gradation value for each pixel corresponding to a print image in black (that is, black) as the image forming material is other than 0, the CPU 11 performs processing of determining that the value of the guideline information is relatively large. Therefore, in the information processing system 10, in a case where the influence of the print image due to the black image forming material is large, the color density of the scan image N of the printed matter (for example, the first scan image 114 shown in Fig. 11) can be compared with the color density of the expected image 102.

Furthermore, when the added value of the gradation values for each pixel corresponding to the print image of each color other than clear as the image forming material is 0, the CPU 11 performs processing of determining that the value of the guideline information is relatively small. Therefore, in the information processing system 10, in a case where the influence of the print image due to the image forming material of each color is small, the color density of the scan image N of the printed matter (for example, the first scan image 114 shown in Fig. 11) can be compared with the color density of the scan image A corresponding to the paper (for example, the second scan image 112 shown in Fig. 11).

Furthermore, when the added value of the gradation values for each pixel corresponding to the print image of each color other than clear as the image forming material is equal to or greater than a specified value, the CPU 11 performs processing of determining that the value of the guideline information is relatively large. Therefore, in the information processing system 10, in a case where the influence of the print image due to the image forming material of each color is large, the color density of the scan image N of the printed matter (for example, the first scan image 114 shown in Fig. 11) can be compared with the color density of the expected image 102.

Furthermore, when the added value of the gradation values for each pixel corresponding to the print image of each color other than clear as the image forming material is smaller than a specified value, the CPU 11 performs processing of determining that the value of the guideline information is relatively small. Therefore, in the information processing system 10, in a case where the influence of the print image due to the image forming material of each color is small, the color density of the scan image N of the printed matter (for example, the first scan image 114 shown in Fig. 11) can be compared with the color density of the scan image A corresponding to the paper (for example, the second scan image 112 shown in Fig. 11).

In addition, based on the pixel position information of the base target and the pixel position information of the print image, the CPU 11 compares the color density of the scan image N of the printed matter (for example, the first scan image 84 shown in Fig. 10) with the color density of the scan image A corresponding to the paper (for example, the second scan image 74 shown in Fig. 10) in the inspection for pixels that do not have the print image and have only the base target. Therefore, in the information processing system 10, for pixels that have only the base target and do not have the print image, color determination can be performed based on the error between the color density of the scan image N (for example, the first scan image 84 shown in Fig. 10) and the color density of the scan image A (for example, the second scan image 74 shown in Fig. 10).

### [Others]

The information processing system according to the present disclosure is not limited to the information processing system 10 according to the first exemplary embodiment, and various modifications are possible.

The above processing of the information processing system 10 can also be realized by a dedicated hardware circuit. In this case, the processing may be executed by a single piece of hardware, or may be executed by a plurality of pieces of hardware.

In addition, the program for operating the information processing system 10 may be provided by a computer-readable recording medium such as a Universal Serial Bus (USB) memory, a flexible disk, a Compact Disc Read Only Memory (CD-ROM), and the like or may be provided online via a network such as the Internet. In this case, the program recorded on the computer-readable recording medium is usually transferred to and stored in a memory, a storage, or the like. Further, this program may be provided, for example, as independent application software, or may be incorporated into the software of each apparatus as one function of the information processing system 10.

It should be noted that, although the present invention has been described in detail with respect to specific exemplary embodiments, the present invention is not limited to such exemplary embodiments, and it will be apparent to a person skilled in the art that various other exemplary embodiments are possible within the scope of the present invention.

### [Supplementary Note]

As described above, in the present exemplary embodiment, the following supplementary notes are disclosed.
(((1)))
   An information processing system comprising:
   at least one processor configured to:
   obtain guideline information on a usage amount of an image forming material that constitutes a print image for each of pixels during a printing process in which the image forming material is placed on an upper side of colored paper or a recording medium with pre-printing and is printed;
   compare, in a case where a value of the guideline information is relatively large when inspecting a read image obtained by reading a printed matter on which the print image is printed on the recording medium, for each of the pixels, a color density of the read image with a color density of the print image; and
   compare, in a case where the value of the guideline information is relatively small, for each of the pixels, the color density of the read image with a color density of a recording medium read image obtained by reading information about the recording medium before execution of the printing process.
(((2)))
   The information processing system according to (((1))), wherein
   a case where the value of the guideline information is relatively large corresponds to a case where the usage amount of the image forming material is relatively large, and
   a case where the value of the guideline information is relatively small corresponds to a case where the usage amount of the image forming material is relatively small.
(((3)))
   The information processing system according to (((1))) or (((2))), wherein the processor is configured to, when comparing the color density of the read image with the color density of the print image through the inspection:
   determine the color density to be normal in a case where a difference is less than an error of an allowable color density; and
   determine the color density to be mismatched in a case where the difference is equal to or greater than the error of the allowable color density.
(((4)))
   The information processing system according to any one of (((1))) to (((3))), wherein the processor is configured to, when comparing the color density of the read image with the color density of the recording medium read image through the inspection:
   determine the color density to be normal in a case where a difference is equal to or greater than an error of a determined color density; and
   determine the color density to be mismatched in a case where the difference is less than the error of the determined color density.
(((5)))
   The information processing system according to (((3))) or (((4))), wherein the processor is configured to:
   output a determination result of the normality or the mismatch to a display unit.
(((6)))
   The information processing system according to any one of (((1))) to (((5))), wherein the processor is configured to:
   regard another read image obtained by reading a printed matter on which blank data is printed on the recording medium as the recording medium read image; and
   acquire pixel position information of a base target from information on the blank data and the recording medium read image.
(((7)))
   The information processing system according to any one of (((1))) to (((6))), wherein the processor is configured to:
   perform processing of determining that the value of the guideline information is relatively large when gradation values for each of the pixels corresponding to a black print image as the image forming material are other than 0.
(((8)))
   The information processing system according to (((7))), wherein the processor is configured to:
   perform processing of determining that the value of the guideline information is relatively small when an added value of the gradation values for each of the pixels corresponding to a print image of each color other than clear as the image forming material is 0.
(((9)))
   The information processing system according to (((8))), wherein the processor is configured to:
   perform processing of determining that the value of the guideline information is relatively large when the added value of the gradation values for each of the pixels corresponding to the print image of each color other than clear as the image forming material is equal to or greater than a determined value.
(((10)))
   The information processing system according to (((9))), wherein the processor is configured to:
   perform processing of determining that the value of the guideline information is relatively small when the added value of the gradation values for each of the pixels corresponding to the print image of each color other than clear as the image forming material is smaller than the determined value.
(((11)))
   The information processing system according to (((6))), wherein the processor is configured to:
   compare the color density of the read image with the color density of the recording medium read image in the inspection for a pixel that does not have the print image and has only the base target based on the pixel position information of the base target and pixel position information of the print image.
(((12)))
   An information processing program causing a computer to execute processing of:
   calculating guideline information on a usage amount of an image forming material that constitutes a print image for each of pixels during a printing process in which the image forming material is placed on an upper side of colored paper or a recording medium with pre-printing and is printed;
   comparing, in a case where a value of the guideline information is relatively large when inspecting a read image obtained by reading a printed matter on which the print image is printed on the recording medium, for each of the pixels, a color density of the read image with a color density of the print image; and
   comparing, in a case where the value of the guideline information is relatively small, for each of the pixels, the color density of the read image with a color density of a recording medium read image obtained by reading information about the recording medium before execution of the printing process.

With the information processing system according to (((1))), in a case of inspecting a print result in which a print image is printed on colored paper or a recording medium with pre-printing, an inspection target area can be prevented from narrowing compared to a case where a colored portion or a portion with pre-printing is excluded from an inspection target.

With the information processing system according to (((2))), in a case where the usage amount of the image forming material is relatively large, the color density of the read image can be compared with the color density of the print image, and in a case where the value of the guideline information is relatively small, the color density of the read image can be compared with the color density of the recording medium read image.

With the information processing system according to (((3))), in a case where the value of the guideline information is relatively large and an influence of the print image is large, the color density of the read image is close to the color density of the print image, resulting in good image quality.

With the information processing system according to (((4))), in a case where the value of the guideline information is relatively small and the influence of the print image is small, the color density of the read image is different from the color density of the recording medium read image, resulting in good image quality.

With the information processing system according to (((5))), it is possible to inform a user of a determination result of the normality or the mismatch.

With the information processing system according to (((6))), by acquiring the pixel position information of the base target, it becomes easier to inspect the read image.

With the information processing system according to (((7))), in a case where the influence of the print image due to the black image forming material is large, the color density of the read image can be compared with the color density of the print image.

With the information processing system according to (((8))), in a case where the influence of the print image due to the image forming material of each color is small, the color density of the read image can be compared with the color density of the recording medium read image.

With the information processing system according to (((9))), in a case where the influence of the print image due to the image forming material of each color is large, the color density of the read image can be compared with the color density of the print image.

With the information processing system according to (((10))), in a case where the influence of the print image due to the image forming material of each color is small, the color density of the read image can be compared with the color density of the recording medium read image.

With the information processing system according to (((11))), for a pixel that has only the base target and does not have the print image, color determination can be performed based on the error between the color density of the read image and the color density of the recording medium read image.

With the information processing program according to (((12))), in a case of inspecting a print result in which a print image is printed on colored paper or a recording medium with pre-printing, an inspection target area can be prevented from narrowing compared to a case where a colored portion or a portion with pre-printing is excluded from an inspection target.

In the embodiments above, the term "processor" refers to hardware in a broad sense. Examples of the processor include general processors (for example, CPU: Central Processing Unit) and dedicated processors (for example, GPU: Graphics Processing Unit, ASIC: Application Specific Integrated Circuit, FPGA: Field Programmable Gate Array, and programmable logic device). In the embodiments above, the term "processor" is broad enough to encompass one processor or plural processors in collaboration which are located physically apart from each other but may work cooperatively. The order of operations of the processor is not limited to one described in the embodiments above, and may be changed.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims.

### Brief Description of the Reference Symbols

10: information processing system
11: CPU (example of processor)
16: display unit
17: communication interface
18: printing unit
19: scanning unit
20: inspection unit
71: blank data
72: printed matter
73: expected image (example of information of blank data)
74: second scan image (example of recording medium read image)
81: print image
82: printed matter
84: first scan image (example of read image)
94: base target pixel position information (example of pixel position information of base target)
96: guideline information
102: expected image (example of print image)
112: second scan image (example of recording medium read image)
114: first scan image (example of read image)
P1: paper (example of recording medium)

## Claims

1. An information processing system comprising:
at least one processor configured to:
obtain guideline information on a usage amount of an image forming material that constitutes a print image for each of pixels during a printing process in which the image forming material is placed on an upper side of colored paper or a recording medium with pre-printing and is printed;
and **characterized in that** said processor is further configured to:
compare, in a case where a value of the guideline information is relatively large when inspecting a read image obtained by reading a printed matter on which the print image is printed on the recording medium, for each of the pixels, a color density of the read image with a color density of the print image; and
compare, in a case where the value of the guideline information is relatively small, for each of the pixels, the color density of the read image with a color density of a recording medium read image obtained by reading information about the recording medium before execution of the printing process.

2. The information processing system according to claim 1, wherein
a case where the value of the guideline information is relatively large corresponds to a case where the usage amount of the image forming material is relatively large, and
a case where the value of the guideline information is relatively small corresponds to a case where the usage amount of the image forming material is relatively small.

3. The information processing system according to claim 1 or 2, wherein the processor is configured to, when comparing the color density of the read image with the color density of the print image through the inspection:
determine the color density to be normal in a case where a difference is less than an error of an allowable color density; and
determine the color density to be mismatched in a case where the difference is equal to or greater than the error of the allowable color density.

4. The information processing system according to any one of claims 1 to 3, wherein the processor is configured to, when comparing the color density of the read image with the color density of the recording medium read image through the inspection:
determine the color density to be normal in a case where a difference is equal to or greater than an error of a determined color density; and
determine the color density to be mismatched in a case where the difference is less than the error of the determined color density.

5. The information processing system according to claim 3 or 4, wherein the processor is configured to:
output a determination result of the normality or the mismatch to a display unit.

6. The information processing system according to any one of claims 1 to 5, wherein the processor is configured to:
regard another read image obtained by reading a printed matter on which blank data is printed on the recording medium as the recording medium read image; and
acquire pixel position information of a base target from information on the blank data and the recording medium read image.

7. The information processing system according to any one of claims 1 to 6, wherein the processor is configured to:
perform processing of determining that the value of the guideline information is relatively large when gradation values for each of the pixels corresponding to a black print image as the image forming material are other than 0.

8. The information processing system according to claim 7, wherein the processor is configured to:
perform processing of determining that the value of the guideline information is relatively small when an added value of the gradation values for each of the pixels corresponding to a print image of each color other than clear as the image forming material is 0.

9. The information processing system according to claim 8, wherein the processor is configured to:
perform processing of determining that the value of the guideline information is relatively large when the added value of the gradation values for each of the pixels corresponding to the print image of each color other than clear as the image forming material is equal to or greater than a determined value.

10. The information processing system according to claim 9, wherein the processor is configured to:
perform processing of determining that the value of the guideline information is relatively small when the added value of the gradation values for each of the pixels corresponding to the print image of each color other than clear as the image forming material is smaller than the determined value.

11. The information processing system according to claim 6, wherein the processor is configured to:
compare the color density of the read image with the color density of the recording medium read image in the inspection for a pixel that does not have the print image and has only the base target based on the pixel position information of the base target and pixel position information of the print image.

12. An information processing program causing a computer to execute processing of:
calculating guideline information on a usage amount of an image forming material that constitutes a print image for each of pixels during a printing process in which the image forming material is placed on an upper side of colored paper or a recording medium with pre-printing and is printed;
charcterized by:
comparing, in a case where a value of the guideline information is relatively large when inspecting a read image obtained by reading a printed matter on which the print image is printed on the recording medium, for each of the pixels, a color density of the read image with a color density of the print image; and
comparing, in a case where the value of the guideline information is relatively small, for each of the pixels, the color density of the read image with a color density of a recording medium read image obtained by reading information about the recording medium before execution of the printing process.

13. An information processing method comprising:
calculating guideline information on a usage amount of an image forming material that constitutes a print image for each of pixels during a printing process in which the image forming material is placed on an upper side of colored paper or a recording medium with pre-printing and is printed;
**characterized by**:
comparing, in a case where a value of the guideline information is relatively large when inspecting a read image obtained by reading a printed matter on which the print image is printed on the recording medium, for each of the pixels, a color density of the read image with a color density of the print image; and
comparing, in a case where the value of the guideline information is relatively small, for each of the pixels, the color density of the read image with a color density of a recording medium read image obtained by reading information about the recording medium before execution of the printing process.

## Patentansprüche

1. Informationsverarbeitungssystem, umfassend:
mindestens einen Prozessor, der so konfiguriert ist, dass er:
Richtlinieninformationen über eine Verbrauchsmenge eines Bilderzeugungsmaterials, das ein Druckbild bildet, für jedes von Pixeln während eines Druckprozesses, bei dem das Bilderzeugungsmaterial auf einer oberen Seite von farbigem Papier oder einem Aufzeichnungsmedium mit Vorbedruckung platziert wird und gedruckt wird, erhält;
und **dadurch gekennzeichnet, dass** der Prozessor ferner so konfiguriert ist, dass er:
in einem Fall, in dem ein Wert der Richtlinieninformationen relativ groß ist, wenn ein gelesenes Bild, das durch Lesen eines gedruckten Materials, auf dem das Druckbild auf dem Aufzeichnungsmedium gedruckt ist, erhalten wird, geprüft wird, für jedes der Pixel eine Farbdichte des gelesenen Bildes mit einer Farbdichte des Druckbildes vergleicht; und
in einem Fall, in dem der Wert der Richtlinieninformationen relativ klein ist, für jedes der Pixel die Farbdichte des gelesenen Bildes mit einer Farbdichte eines Aufzeichnungsmedium-Lesebildes, das durch Lesen von Informationen über das Aufzeichnungsmedium vor Ausführung des Druckprozesses erhalten wird, vergleicht.

2. Informationsverarbeitungssystem nach Anspruch 1, wobei
ein Fall, in dem der Wert der Richtlinieninformationen relativ groß ist, einem Fall entspricht, in dem die Verbrauchsmenge des Bilderzeugungsmaterials relativ groß ist, und
ein Fall, in dem der Wert der Richtlinieninformationen relativ klein ist, einem Fall entspricht, in dem die Verbrauchsmenge des Bilderzeugungsmaterials relativ klein ist.

3. Informationsverarbeitungssystem nach Anspruch 1 oder 2, wobei der Prozessor, wenn er die Farbdichte des gelesenen Bildes mit der Farbdichte des Druckbildes durch die Prüfung vergleicht, so konfiguriert ist, dass er:
die Farbdichte, die normal sein soll, in einem Fall, in dem eine Differenz kleiner als ein Fehler einer zulässigen Farbdichte ist, bestimmt; und
die Farbdichte, die nicht übereinstimmen soll, in einem Fall, in dem die Differenz gleich oder größer als der Fehler der zulässigen Farbdichte ist, bestimmt.

4. Informationsverarbeitungssystem nach einem der Ansprüche 1 bis 3, wobei der Prozessor, wenn er die Farbdichte des gelesenen Bildes mit der Farbdichte des Aufzeichnungsmedium-Lesebildes durch die Prüfung vergleicht, so konfiguriert ist, dass er:
die Farbdichte, die normal sein soll, in einem Fall, in dem eine Differenz gleich oder größer als ein Fehler einer bestimmten Farbdichte ist, bestimmt; und
die Farbdichte, die nicht übereinstimmen soll, in einem Fall, in dem die Differenz kleiner als der Fehler der bestimmten Farbdichte ist, bestimmt.

5. Informationsverarbeitungssystem nach Anspruch 3 oder 4, wobei der Prozessor so konfiguriert ist, dass er:
ein Bestimmungsergebnis der Normalität oder der Nichtübereinstimmung an eine Anzeigeeinheit ausgibt.

6. Informationsverarbeitungssystem nach einem der Ansprüche 1 bis 5, wobei der Prozessor so konfiguriert ist, dass er:
ein anderes gelesenes Bild, das durch Lesen eines gedruckten Materials, auf dem auf dem Aufzeichnungsmedium Leerdaten gedruckt sind, erhalten wird, als das Aufzeichnungsmedium-Lesebild betrachtet; und
Pixelpositionsinformationen eines Basisziels aus Informationen über die Leerdaten und das Aufzeichnungsmedium-Lesebild erfasst.

7. Informationsverarbeitungssystem nach einem der Ansprüche 1 bis 6, wobei der Prozessor so konfiguriert ist, dass er:
eine Verarbeitung des Bestimmens, dass der Wert der Richtlinieninformationen relativ groß ist, wenn Gradationswerte für jedes der Pixel, die einem schwarzen Druckbild als das Bilderzeugungsmaterial entsprechen, von 0 verschieden sind, durchführt.

8. Informationsverarbeitungssystem nach Anspruch 7, wobei der Prozessor so konfiguriert ist, dass er:
eine Verarbeitung des Bestimmens, dass der Wert der Richtlinieninformationen relativ klein ist, wenn ein Summenwert der Gradationswerte für jedes der Pixel, die einem Druckbild jeder Farbe außer Transparent als dem Bilderzeugungsmaterial entsprechen, 0 ist, durchführt.

9. Informationsverarbeitungssystem nach Anspruch 8, wobei der Prozessor so konfiguriert ist, dass er:
eine Verarbeitung des Bestimmens, dass der Wert der Richtlinieninformationen relativ groß ist, wenn der Summenwert der Gradationswerte für jedes der Pixel, die dem Druckbild jeder Farbe außer Transparent als dem Bilderzeugungsmaterial entsprechen, gleich oder größer als ein bestimmter Wert ist, durchführt.

10. Informationsverarbeitungssystem nach Anspruch 9, wobei der Prozessor so konfiguriert ist, dass er:
eine Verarbeitung des Bestimmens, dass der Wert der Richtlinieninformationen relativ klein ist, wenn der Summenwert der Gradationswerte für jedes der Pixel, die dem Druckbild jeder Farbe außer Transparent als dem Bilderzeugungsmaterial entsprechen, kleiner als der bestimmte Wert ist, durchführt.

11. Informationsverarbeitungssystem nach Anspruch 6, wobei der Prozessor so konfiguriert ist, dass er:
die Farbdichte des gelesenen Bildes mit der Farbdichte des Aufzeichnungsmedium-Lesebildes bei der Prüfung für ein Pixel, das das Druckbild nicht aufweist und nur das Basisziel aufweist, auf der Grundlage der Pixelpositionsinformationen des Basisziels und Pixelpositionsinformationen des Druckbildes vergleicht.

12. Informationsverarbeitungsprogramm, das einen Computer veranlasst, eine Verarbeitung auszuführen von:
Berechnen von Richtlinieninformationen über eine Verbrauchsmenge eines Bilderzeugungsmaterials, das ein Druckbild für jedes von Pixeln während eines Druckprozesses, bei dem das Bilderzeugungsmaterial auf einer oberen Seite von farbigem Papier oder einem Aufzeichnungsmedium mit Vorbedruckung platziert und gedruckt wird, bildet;
**gekennzeichnet durch**
Vergleichen, in einem Fall, in dem ein Wert der Richtlinieninformationen relativ groß ist, wenn ein gelesenes Bild, das durch Lesen eines gedruckten Materials, auf dem das Druckbild auf dem Aufzeichnungsmedium gedruckt ist, erhalten wird, geprüft wird, für jedes der Pixel einer Farbdichte des gelesenen Bildes mit einer Farbdichte des Druckbildes; und
Vergleichen, in einem Fall, in dem der Wert der Richtlinieninformationen relativ klein ist, für jedes der Pixel der Farbdichte des gelesenen Bildes mit einer Farbdichte eines Aufzeichnungsmedium-Lesebildes, das durch Lesen von Informationen über das Aufzeichnungsmedium vor Ausführung des Druckprozesses erhalten wird.

13. Informationsverarbeitungsverfahren, umfassend:
Berechnen von Richtlinieninformationen über eine Verbrauchsmenge eines Bilderzeugungsmaterials, das ein Druckbild für jedes von Pixeln während eines Druckprozesses, bei dem das Bilderzeugungsmaterial auf einer oberen Seite von farbigem Papier oder einem Aufzeichnungsmedium mit Vorbedruckung platziert und gedruckt wird, bildet;
**gekennzeichnet durch**
Vergleichen, in einem Fall, in dem ein Wert der Richtlinieninformationen relativ groß ist, wenn ein gelesenes Bild, das durch Lesen eines gedruckten Materials, auf dem das Druckbild auf dem Aufzeichnungsmedium gedruckt ist, erhalten wird, geprüft wird, für jedes der Pixel einer Farbdichte des gelesenen Bildes mit einer Farbdichte des Druckbildes; und
Vergleichen, in einem Fall, in dem der Wert der Richtlinieninformationen relativ klein ist, für jedes der Pixel der Farbdichte des gelesenen Bildes mit einer Farbdichte eines Aufzeichnungsmedium-Lesebildes, das durch Lesen von Informationen über das Aufzeichnungsmedium vor Ausführung des Druckprozesses erhalten wird.

## Revendications

1. Système de traitement d'informations comprenant :
au moins un processeur configuré pour :
obtenir des informations de ligne directrice sur une quantité d'utilisation d'un matériau de formation d'images qui constitue une image imprimée pour chacun des pixels pendant un processus d'impression dans lequel le matériau de formation d'images est placé sur un côté supérieur d'un papier coloré ou d'un support d'enregistrement avec pré-impression et est imprimé ;
et **caractérisé en ce que** ledit processeur est en outre configuré pour :
comparer, dans un cas où une valeur des informations de ligne directrice est relativement grande lors de l'inspection d'une image lue obtenue en lisant un imprimé sur lequel l'image imprimée est imprimée sur le support d'enregistrement, pour chacun des pixels, une densité de couleur de l'image lue avec une densité de couleur de l'image imprimée ; et
comparer, dans un cas où la valeur des informations de ligne directrice est relativement petite, pour chacun des pixels, la densité de couleur de l'image lue avec une densité de couleur d'une image lue de support d'enregistrement obtenue en lisant des informations sur le support d'enregistrement avant l'exécution du processus d'impression.

2. Système de traitement d'informations selon la revendication 1, dans lequel
un cas où la valeur des informations de ligne directrice est relativement grande correspond à un cas où la quantité d'utilisation du matériau de formation d'images est relativement grande, et
un cas où la valeur des informations de ligne directrice est relativement petite correspond à un cas où la quantité d'utilisation du matériau de formation d'images est relativement petite.

3. Système de traitement d'informations selon la revendication 1 ou la revendication 2, dans lequel le processeur est configuré pour, lors de la comparaison de la densité de couleur de l'image lue avec la densité de couleur de l'image imprimée via l'inspection :
déterminer la densité de couleur comme étant normale dans un cas où une différence est inférieure à une erreur d'une densité de couleur admissible ; et
déterminer la densité de couleur comme étant inadaptée dans un cas où la différence est égale ou supérieure à l'erreur de la densité de couleur admissible.

4. Système de traitement d'informations selon l'une quelconque des revendications 1 à 3, dans lequel le processeur est configuré pour, lors de la comparaison de la densité de couleur de l'image lue avec la densité de couleur de l'image lue de support d'enregistrement via l'inspection :
déterminer la densité de couleur comme étant normale dans un cas où une différence est égale ou supérieure à une erreur d'une densité de couleur déterminée ; et
déterminer la densité de couleur comme étant inadaptée dans un cas où la différence est inférieure à l'erreur de la densité de couleur déterminée.

5. Système de traitement d'informations selon la revendication 3 ou la revendication 4, dans lequel le processeur est configuré pour :
sortir un résultat de détermination de la normalité ou de l'inadaptation à une unité d'affichage.

6. Système de traitement d'informations selon l'une quelconque des revendications 1 à 5, dans lequel le processeur est configuré pour :
considérer une autre image lue obtenue en lisant un imprimé sur lequel des données vierges sont imprimées sur le support d'enregistrement comme l'image lue de support d'enregistrement ; et
acquérir des informations de position de pixel d'une cible de base à partir des informations sur les données vierges et de l'image lue de support d'enregistrement.

7. Système de traitement d'informations selon l'une quelconque des revendications 1 à 6, dans lequel le processeur est configuré pour :
effectuer un traitement de détermination que la valeur des informations de ligne directrice est relativement grande lorsque des valeurs de gradation pour chacun des pixels correspondant à une image d'impression noire en tant que matériau de formation d'images sont différentes de 0.

8. Système de traitement d'informations selon la revendication 7, dans lequel le processeur est configuré pour :
effectuer un traitement de détermination que la valeur des informations de ligne directrice est relativement petite lorsqu'une valeur additionnée des valeurs de gradation pour chacun des pixels correspondant à une image imprimée de chaque couleur autre que transparente en tant que matériau de formation d'images est 0.

9. Système de traitement d'informations selon la revendication 8, dans lequel le processeur est configuré pour :
effectuer un traitement de détermination que la valeur des informations de ligne directrice est relativement grande lorsque la valeur additionnée des valeurs de gradation pour chacun des pixels correspondant à l'image imprimée de chaque couleur autre que transparente en tant que matériau de formation d'images est égale ou supérieure à une valeur déterminée.

10. Système de traitement d'informations selon la revendication 9, dans lequel le processeur est configuré pour :
effectuer un traitement de détermination que la valeur des informations de ligne directrice est relativement petite lorsque la valeur additionnée des valeurs de gradation pour chacun des pixels correspondant à l'image imprimée de chaque couleur autre que transparente en tant que matériau de formation d'images est inférieure à la valeur déterminée.

11. Système de traitement d'informations selon la revendication 6, dans lequel le processeur est configuré pour :
comparer la densité de couleur de l'image lue avec la densité de couleur de l'image lue de support d'enregistrement lors de l'inspection pour un pixel qui n'a pas l'image imprimée et n'a que la cible de base sur la base des informations de position de pixel de la cible de base et des informations de position de pixel de l'image imprimée.

12. Programme de traitement d'informations amenant un ordinateur à exécuter un traitement de :
calculer des informations de ligne directrice sur une quantité d'utilisation d'un matériau de formation d'images qui constitue une image imprimée pour chacun des pixels pendant un processus d'impression dans lequel le matériau de formation d'images est placé sur un côté supérieur d'un papier coloré ou d'un support d'enregistrement avec pré-impression et est imprimé ;
**caractérisé par** :
comparer, dans un cas où une valeur des informations de ligne directrice est relativement grande lors de l'inspection d'une image lue obtenue en lisant un imprimé sur lequel l'image imprimée est imprimée sur le support d'enregistrement, pour chacun des pixels, une densité de couleur de l'image lue avec une densité de couleur de l'image imprimée ; et
comparer, dans un cas où la valeur des informations de ligne directrice est relativement petite, pour chacun des pixels, la densité de couleur de l'image lue avec une densité de couleur d'une image lue de support d'enregistrement obtenue en lisant des informations sur le support d'enregistrement avant l'exécution du processus d'impression.

13. Procédé de traitement d'informations comprenant :
calculer des informations de ligne directrice sur une quantité d'utilisation d'un matériau de formation d'images qui constitue une image imprimée pour chacun des pixels pendant un processus d'impression dans lequel le matériau de formation d'images est placé sur un côté supérieur d'un papier coloré ou d'un support d'enregistrement avec pré-impression et est imprimé ;
**caractérisé par** :
comparer, dans un cas où une valeur des informations de ligne directrice est relativement grande lors de l'inspection d'une image lue obtenue en lisant un imprimé sur lequel l'image imprimée est imprimée sur le support d'enregistrement, pour chacun des pixels, une densité de couleur de l'image lue avec une densité de couleur de l'image imprimée ; et
comparer, dans un cas où la valeur des informations de ligne directrice est relativement petite, pour chacun des pixels, la densité de couleur de l'image lue avec une densité de couleur d'une image lue de support d'enregistrement obtenue en lisant des informations sur le support d'enregistrement avant l'exécution du processus d'impression.
